# EUROPEAN PATENT SPECIFICATION

(11) **EP 4 576 802 B1**
(45) Date of publication and mention of the grant of the patent: **14.10.2026**
(21) Application number: 23857593.0
(22) Date of filing: 27.07.2023
(51) Int. Cl.: G06T 11/00, H04N 23/951, H04N 5/265, H04N 23/70, H04N 21/8547, G06T 17/00, G06V 10/82, G06V 10/764

(54) **METHOD FOR SYNTHESIZING IMAGE, AND ELECTRONIC DEVICE SUPPORTING SAME**
VERFAHREN ZUR BILDSYNTHESE UND ELEKTRONISCHE VORRICHTUNG ZUR UNTERSTÜTZUNG DAVON
PROCÉDÉ DE SYNTHÈSE D'IMAGE ET DISPOSITIF ÉLECTRONIQUE LE PRENANT EN CHARGE

(30) Priority: 22.08.2022 KR 20220104948; 08.09.2022 KR 20220113853
(43) Date of publication of application: 25.06.2025
(73) Proprietor: Samsung Electronics Co., Ltd., Suwon-si, Gyeonggi-do 16677 (KR)
(72) Inventor: AHN, Byeongyong, Suwon-si Gyeonggi-do 16677 (KR); KIM, Bosung, Suwon-si Gyeonggi-do 16677 (KR); PARK, Jiyoon, Suwon-si Gyeonggi-do 16677 (KR); LEE, Dasom, Suwon-si Gyeonggi-do 16677 (KR)
(74) Representative: Gulde & Partner
(86) International application number: PCT/KR2023/010953
(87) International publication number: WO 2024/043557

(56) References cited:
- CN-A- 110 392 202
- CN-A- 113 709 331
- KR-A- 20170 112 066
- KR-B1- 102 131 369
- KR-B1- 102 287 043
- US-A1- 2013 242 121
- US-A1- 2018 234 640
- US-B2- 10 382 703

## Description

### [Technical Field]

The disclosure relates to an image synthesizing method and an electronic device that supports the same.

### [Background Art]

As communication technology has rapidly developed, functions provided by portable terminals have been gradually expanded, and various user interfaces (UI) and various functions based thereon have been provided. In order to increase the effective value of portable terminals and satisfy various demands of users, various applications executable in portable terminals are being developed. For example, an image synthesis application that a user downloads via a wireless Internet service provides a function of combining various hair styles with a picture captured by the user.

In addition, as people's interest in the exploration of space has been increased, the demand for capturing the sky including celestial objects such as stars at night has been increased. In similar regards, publication CN 110392202 A relates to an image processing apparatus and a photographing system configured to generate superimposed display metadata for combining a first image in a first mapping mode with a second image in a different mapping mode, publication CN 11370933 1A relates to a computer-implemented digital astronomical imaging method, implementable on a terminal device, in which image data comprising a captured sky area is acquired and sky data is obtained from the image data, global positioning information and motion data of the terminal device are acquired, and publication US 10382703 B2 relates to an imaging apparatus and image processing method for multiple-exposure "star-scape" photography, in which a subject recognition section distinguishes a still subject portion and a moving subject portion across successive frames.

### [Detailed Description of the Invention]

### [Technical Solution]

An embodiment of the disclosure is to provide a synthesis image via a display module, the synthesis image being obtained by synthesizing a virtual celestial object image with a nightscape image obtained via a camera module. In this instance, the disclosure is not limited to the description herein.

According to an embodiment of the disclosure, an electronic device is provided corresponding to the appended claim 1.

According to an embodiment of the disclosure, an image synthesizing method of an electronic device is provided corresponding to the appended claim 10.

Further detailed aspects are provided in the dependent claims.

### [Brief Description of Drawings]

FIG. 1 is a block diagram illustrating an electronic device in a network environment according to an embodiment of the disclosure;
FIG. 2 is a block diagram illustrating an electronic device according to an embodiment of the disclosure;
FIG. 3 is a flowchart illustrating an operation of obtaining a synthesis image, by an electronic device according to an embodiment of the disclosure;
FIG. 4 is a diagram illustrating an operation of obtaining a third image from a first image, by an electronic device according to an embodiment of the disclosure;
FIG. 5 is a flowchart illustrating an operation of obtaining, from a first image, a suppression map for determining a pixel value of a second image, by an electronic device according to an embodiment of the disclosure;
FIG. 6 is a flowchart illustrating an operation of synthesizing a first image and a second image based on information obtained from the first image, by an electronic device according to an embodiment of the disclosure;
FIG. 7 is a flowchart illustrating an operation of adjusting a composition of a second image based on a user input, by an electronic device according to an embodiment of the disclosure;
FIG. 8 is a diagram illustrating an operation of adjusting a composition of a second image based on a user input, by an electronic device according to an embodiment of the disclosure;
FIG. 9 is a diagram illustrating an operation of changing an effect applied to a recommended image, by an electronic device according to an embodiment of the disclosure;
FIG. 10 is a flowchart illustrating an operation of obtaining a synthesis video based on a plurality of input images, by an electronic device according to an embodiment of the disclosure;
FIG. 11 is a diagram illustrating an operation of obtaining a synthesis video based on a plurality of input images, by an electronic device according to an embodiment of the disclosure;
FIG. 12 is a flowchart illustrating an operation of obtaining a synthesis image to which a diurnal motion effect is applied, by an electronic device according to an embodiment of the disclosure; and
FIG. 13 is a diagram illustrating an operation of obtaining a synthesis image to which a diurnal motion effect is applied, by an electronic device according to an embodiment of the disclosure.

### [Mode for Carrying out the Invention]

Hereinafter, embodiments of the disclosure will be described in detail with reference to enclosed drawings so that those skilled in the art could easily implement the embodiments. However, the disclosure could be implemented in different manners, and is not limited to the embodiments described below. Identical or like reference numerals in the drawings denote identical or like components. In addition, a description of a well-known function and configuration may be omitted in the drawings and related descriptions for clarity and simplicity.

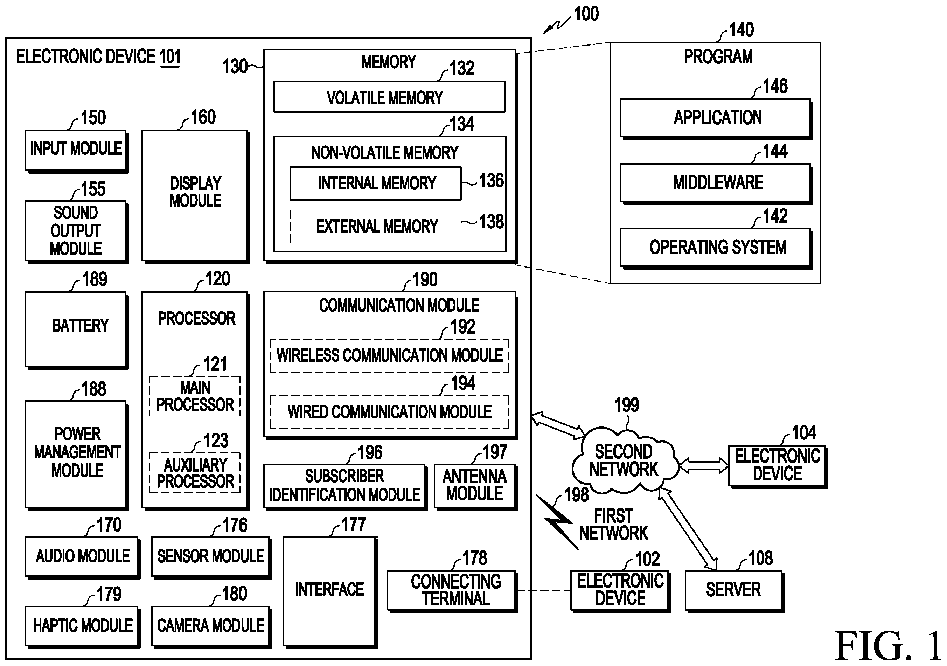

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

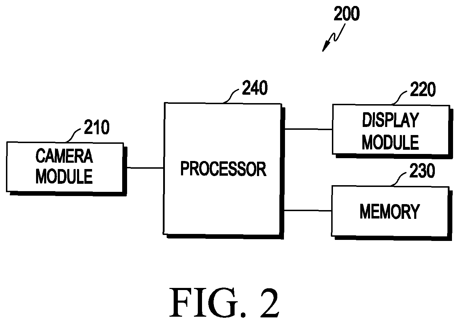

FIG. 2 is a block diagram illustrating an electronic device 200 according to an embodiment of the disclosure.

Referring to FIG. 2, according to an embodiment, the electronic device 200 (e.g., the electronic device 101 of FIG. 1) may include a camera module 210, a display module 220, memory 230, and at least one processor 240.

According to an embodiment, the camera module 210 (including, e.g., a camera) may be included in the display module 180 of FIG. 1.

According to an embodiment, the display module 220 (including, e.g., a display) may be included in the display module 160 of FIG. 1.

According to an embodiment, the display module 220 may display an image obtained via the camera module 210. For example, the display module 220 may display a dynamic image (e.g., preview image, a moving image) obtained via the camera module 210 and/or a still image.

According to an embodiment, the memory 230 may be included in the memory 130 of FIG. 1.

According to an embodiment, the memory 230 may store a three-dimensional (3D) model including locations and directions of celestial objects relative to the electronic device 200. Information that the memory 230 stores will be described later.

According to an embodiment, the processor 240 (including, e.g., processing circuitry) may be included in the processor 120 of FIG. 1.

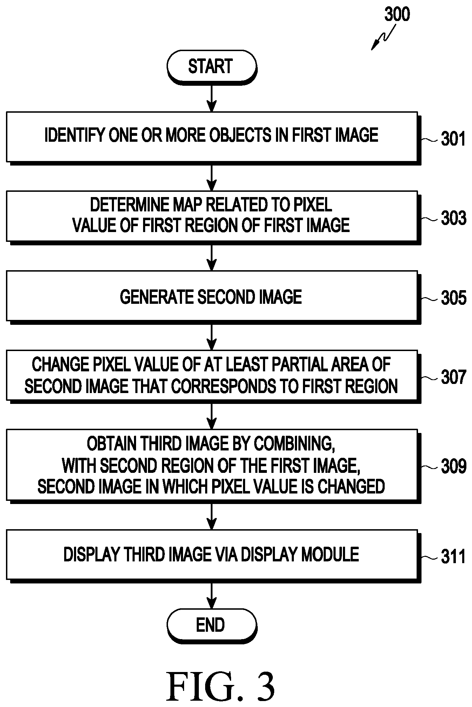

According to an embodiment, the processor 240 may control overall operations for synthesizing a virtual image with an image obtained via the camera module 210. According to an embodiment, the processor 240 may include one or more processors for image synthesizing. The one or more processors may be operatively connected to the memory 230, the camera module 210, and the display module 220. Operations performed by the processor 240 to synthesize an image will be described below with reference to FIGS. 3 to 13.

Although FIG. 2 illustrates that the electronic device 200 includes the camera module 210, the display module 220, the memory 230, and/or the processor 240, the disclosure is not limited thereto. For example, the electronic device 100 may further include at least one configuration illustrated in FIG. 1. According to an embodiment, the electronic device 200 may further include a communication module (e.g., the communication module 190 of FIG. 1). The electronic device 200 may receive data for updating a 3D model from an external electronic device (e.g., the electronic device 104 of FIG. 1).

FIG. 3 is a flowchart 300 illustrating an operation of obtaining a synthesis image by the electronic device 200 according to an embodiment of the disclosure.

In the embodiment provided hereinafter, operations may be performed sequentially, but the order is not necessarily sequential. For example, the order of operations may be changed, and at least two operations may be performed in parallel.

According to an embodiment, it may be understood that operations 301 to 311 are performed by at least one processor (e.g., the processor 240 of FIG. 2) of an electronic device (e.g., the electronic device 200 of FIG. 2).

Referring to FIG. 3, in operation 301, according to an embodiment, the processor 240 may identify one or more objects in a first image. According to an embodiment, the first image may be an image obtained by a camera module (e.g., the camera module 210 of FIG. 2). According to an embodiment, the first image may be an image stored in memory (e.g., the memory 230 of FIG. 2). According to an embodiment, the first image may be an image received from an external electronic device (e.g., the electronic device 102 of FIG. 1) via a first network (e.g., the first network 198 of FIG. 1). According to an embodiment, the first image may be an image received from an external electronic device (e.g., the electronic device 104 or the server 108 of FIG. 1) via a second network (e.g., the second network 199 of FIG. 1). A way of obtaining the first image is not limited to the above-described example.

According to an embodiment, based on image segmentation, the processor 240 may identify one or more objects in the first image. The first image may be a still image obtained by the camera module 210. According to an embodiment, the first image may be a moving image obtained by the camera module 210. According to an embodiment, the processor 240 may input the first image into a previously trained object recognition model, and may obtain a label corresponding to each of the one or more objects included in the first image. According to an embodiment, the object recognition model may be previously trained so as to output labels corresponding to one or more objects included in an image by using previously collected images as training data. The trained object recognition model may segment an input image into a plurality of regions, and may identify an object included in each region. According to an embodiment, an object included in the first image may include at least one of the sky, clouds, the moon, a lighting, and the ground. The processor 240 may classify the regions of the first image as regions corresponding to one or more objects recognized in the first image. According to an embodiment, the processor 240 may classify the regions of the first image as a sky region, a cloud region, a moon region, a lighting region, and a miscellaneous region (non-region of interest (Non-ROI)). An object identified by the object recognition model is not limited to the above-described example. According to an embodiment, an object identified by the object recognition model may include an object such as the ocean, a mountain, or a lake or the like.

**In** operation 303, according to an embodiment, the processor 240 may determine a map related to a pixel value of a first region of the first image.

According to an embodiment, the processor 240 may determine a map to adjust a pixel value of a surrounding region of a predetermined object among the one or more objects included in the first image. The first region may be a surrounding region of the predetermined object. The predetermined object may include clouds, the moon, and a lighting.

According to an embodiment, the processor 240 may determine a suppression map to adjust a pixel value of a surrounding region based on a brightness value of the cloud region, the moon region, and the lighting region. The map to adjust a pixel value may be referred to as "suppression map". The size of a suppression map may be substantially the same as the size of the first image. According to an embodiment, the processor 240 may determine a suppression map corresponding to an object based on a relative location of a pixel relative to the object and a hue-saturation-value (HSV) value.

According to an embodiment, the processor 240 may analyze the first image in order to determine at least one suppression map for adjusting a pixel value. The processor 240 may analyze the first image and may obtain information related to image synthesizing associated with the first image. The processor 240 may obtain a pixel value of each identified region. According to an embodiment, the processor 240 may traverse identified regions and extract a representative (e.g., a median, mode, or mean) brightness value of each region.

According to an embodiment, based on brightness values of regions including predetermined objects, the processor 240 may determine at least one suppression map corresponding to each region. According to an embodiment, when at least one of the moon region, the lighting region, and the cloud region is identified, the processor 240 may generate at least one suppression map corresponding to the identified region.

According to an embodiment, the processor 240 may generate a suppression map associated with at least one of the moon region and the lighting region. The suppression map associated with the moon region or the lighting region may include information associated with a brightness distribution and a relative location of a pixel located in a surrounding region of the moon region or the lighting region. As the brightness value of the moon region or the lighting region is higher, the processor 240 may decrease the brightness value of a surrounding region. As the brightness value of the moon region or the lighting region is higher, the processor 240 may relatively increase the size of the region of which the brightness value is decreased. As the distance to the moon region or the lighting region is shorter, the processor 240 may relatively decrease the brightness value of a surrounding region.

According to an embodiment, the processor 240 may generate a suppression map associated with the cloud region. The processor 240 may compute a representative (e.g., median, mode, or mean) brightness value of the sky region that is a predetermined radius apart from the cloud region. Based on the difference between the representative brightness value of the sky region around the cloud region and a brightness value of the cloud region, the processor 240 may decrease the brightness value of a pixel located surrounding the cloud region. As the difference in brightness value is higher, the processor 240 may relatively decrease the brightness value of a pixel located in the surrounding region.

In operation 305, according to an embodiment, the processor 240 may generate a second image based on at least one of metadata of the first image, a user input for determining a composition of the second image, or a three-dimensional (3D) model.

According to an embodiment, the processor 240 may obtain the second image based on the user input for determining the composition of the second image and the 3D model. The user input may include information associated with a right ascension, a declination, and an angle for obtaining the second image. According to an embodiment, the user input may include information associated with GPS information, a date, a time, and an observation direction. According to an embodiment, the processor 240 may store one or more second images generated in advance.

According to an embodiment, the processor 240 may obtain (or estimate) a composition of the first image based on a capturing date, a latitude, a longitude, and the lateral axis, longitudinal axis, and vertical axis rotation angles relative to the ground, which are included in the first image. According to an embodiment, metadata of the first image may include a capturing date of the first image, GPS information of the first image, and gyro sensor information obtained when the first image is captured.

According to an embodiment, the processor 240 may obtain time information indicating a time when the first image is captured based on the capturing date included in the first image. The processor 240 may obtain location information indicating a location where the first image is captured based on the GPS information included in the first image. The processor 240 may obtain (or compute) a latitude and a longitude corresponding to the location information indicating the location where the first image is captured. Based on the date when the first image is captured, and the latitude and longitude of the location where the first image is captured, the processor 240 may obtain a composition of a celestial object image observable at the date and location where the first image is captured. The composition may include a directional element and an angular element.

According to an embodiment, based on a gyro sensor information included in the first image, the processor 240 may obtain pitch, yaw, and roll values corresponding to the first image. According to an embodiment, the pitch value may be a rotation angle of the camera lens about the lateral axis. The yaw value may be a rotation angle of the camera lens about the vertical axis. The roll value may be a rotation angle of the camera lens about its longitudinal axis. Based on the pitch, yaw, and roll values corresponding to the first image, the processor 240 may obtain the direction and angle of the first image. Based on the pitch value, the processor 240 may obtain the vertical direction information of the first image. Based on the yaw value, the processor 240 may obtain the horizontal direction information of the first image. Based on the roll value, the processor 240 may obtain the angular information of the first image. According to an embodiment, when metadata of the first image is not obtained, the processor 240 may determine the configuration of the celestial object image based on the current time, gyro sensor information of the electronic device 200, and the GPS information of the electronic device 200.

According to an embodiment, the processor 240 (e.g., the electronic device 200 of FIG. 2) may store information associated with the locations and brightness of celestial objects in the memory 230 (e.g., the memory 130 of FIG. 1) based on actual celestial object data. Based on generation of a celestial object model in a virtual 3D spherical shape, the processor 240 may store information associated with the locations and brightness of celestial objects. According to an embodiment, the processor 240 may generate a 3D model in the form of a sphere so that the 3D model corresponds to the celestial sphere. The center coordinates of the spherical-shape 3D model may correspond to the location of the earth in the celestial sphere. Based on apparent magnitudes of celestial objects, the processor 240 may determine the brightness values of point sources of light so that the point sources of light located in the surface of the spherical-shape 3D model correspond to celestial objects. An apparent magnitude of a celestial object may be a relative brightness value of the celestial object, determined based on its absolute magnitude and the distance between the celestial object and the earth. Based on the right ascension and the declination of a real celestial object on the equatorial coordinates, the processor 240 may determine the location of a point source of light in the surface of the 3D model. Based on the determined location of the point source of light, the processor 240 may use the GPS information of the first image so as to identify the locations of the point sources of light in the 3D model. The equatorial coordinate system may be a scheme of expressing the direction of a celestial object in the celestial sphere by using a right ascension and a declination based on the equator and vernal equinox of the celestial sphere. The vernal equinox is a point where the sun crosses the celestial equator, moving along the ecliptic from the South to the North.

According to an embodiment, the processor 240 may generate the second image by obtaining a partial area of the surface of the 3D model based on the obtained composition of the first image. According to an embodiment, the size of the second image may be substantially the same as the first image. According to an embodiment, based on a direction and an angle included in the composition of the first image, the processor 240 may generate the second image by extracting, from the 3D model, a surface area having substantially the same size as that of the first image. The processor 240 may obtain the second image including celestial objects based on perspective projection. Based on the composition of the first image, the processor 240 may project the celestial objects located in the surface of the 3D model onto an image plane having substantially the same size as the size of the first image. The processor 240 may provide an effect as if a celestial object image observable from the center of the celestial sphere were captured by generating the second image based on the composition of the first image and the 3D model. According to an embodiment, the processor 240 may transmit the composition of the first image to an external electronic device (e.g., the electronic device 104 or the server 108 of FIG. 1), and may receive, from the external electronic device, the second image extracted from a virtual 3D model based on the composition of the first image.

In operation 307, according to an embodiment, based on at least one suppression map, the processor 240 may change a pixel value of at least partial area of the second image that corresponds to the first region.

According to an embodiment, based on a pixel value included in at least one of a suppression map associated with the lighting region, a suppression map associated with the moon region, and a suppression map associated with the cloud region, the processor 240 may decrease a brightness value of at least partial area of the second image that corresponds to the first region. Based on the pixel value of the second image, the processor 240 may generate a hue map, a saturation map, and a lightness (value) map for the second image. The size of each map generated from the second image may be the same as the size of the second image. Based on Equation 1, the processor 240 may adjust the brightness value of the value map generated from the second image. [Equation 1] ${V}_{out} \left(x, y\right) = {V}_{in} \left(x, y\right) ∗ \frac{{Bright}_{input}}{{Bright}_{ref}} ∗ \frac{1}{1 + {Suppression}_{moon} \left(x, y\right)} ∗ \frac{1}{1 + {Suppression}_{light} \left(x, y\right)} ∗ \frac{1}{1 + {Suppression}_{cloud} \left(x, y\right)}$

Equation 1 is merely an example for helping understanding, and the disclosure is not limited thereto and may be modified, applied, or extended in various ways.

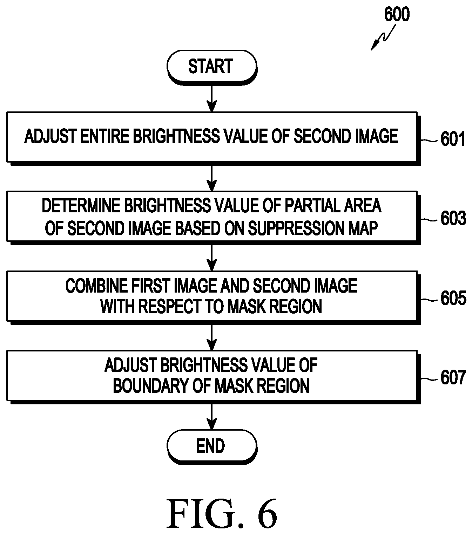

According to an embodiment, referring to Equation 1, the processor 240 may obtain (or compute) a pixel value (e.g., Vₒᵤₜ(x, y)) of an adjusted value map from a pixel value (e.g., Vᵢₙ(x, y)) of the value map for the second image. The processor 240 may adjust an entire brightness value of the second image based on an entire brightness value (e.g., Brightᵢₙₚᵤₜ) of the first image and a predetermined reference brightness value (e.g., Bright_{ref}). A method in which the processor 240 adjusts the entire brightness value of the second image will be described with reference to FIG. 6. According to an embodiment, based on at least one of a pixel value (suppressionₘₒₒₙ(x, y)) of the suppression map associated with the moon, a pixel value (e.g., suppression_{light}(x, y)) of the suppression map associated with the lighting, and a pixel value (e.g., suppression_{cloud}(x, y)) of the suppression map associated with the clouds, the processor 240 may decrease the pixel value of a value map. The processor 240 may determine the pixel value of the value map in reverse proportion to the pixel value of the suppression maps. For example, referring to Equation 1, the processor 240 may relatively and significantly decrease the pixel value of the value map, as the pixel value of a suppression map is higher. The processor 240 may traverse the pixels of the value map, so as to obtain the second image in which the brightness value of some regions is adjusted. The processor 240 may provide an effect of naturally blurring celestial objects located in a region corresponding to the first region by adjusting the pixel value of the value map for the second image based on the suppression maps obtained from the first image.

In operation 309, according to an embodiment, the processor 240 may obtain a third image by synthesizing, with a second region of the first image, the second image in which the pixel value is changed.

According to an embodiment, the processor 240 may obtain the third image by synthesizing the second image of which the brightness value is adjusted with the second region of the first image in operation 307. The second region may be a region including a predetermined object. According to an embodiment, the object included in the second region may be clouds and the sky. The third image may be an image obtained by synthesizing the second image and the first image in the second region. The size of the third image may be substantially the same as the size of each of the first image and the second image. The processor 240 may synthesize the first image and the second image, with respect to a region corresponding to a predetermined object. The processor 240 may perform a weighted summation of the first image and the second image, with respect to a region including the cloud region and the sky region. The processor 240 may store in advance a weight value for each of the first image and the second image in the memory 230. The processor 240 may synthesize, with the first image, the second image in which the pixel value is adjusted, and may simply display celestial objects in the first image obtained by the camera module 210 and may also provide a synthesis image in which the celestial objects of which the pixel value is adjusted is naturally synthesized with the first image. According to an embodiment, an image of the regions excluding the second region from the third image may be substantially the same as an image of regions excluding the second region from the first image.

In operation 311, according to an embodiment, the processor 240 may display the obtained third image via the display module (e.g., the display module 220 of FIG. 3).

According to an embodiment, the processor 240 may control the display module 220 so as to display the third image obtained by synthesizing the second image with the first image in the second region. The processor 240 may display the obtained third image via the display module 220, thereby providing an image in which celestial objects are synthesized with the first image, without space and time restrictions.

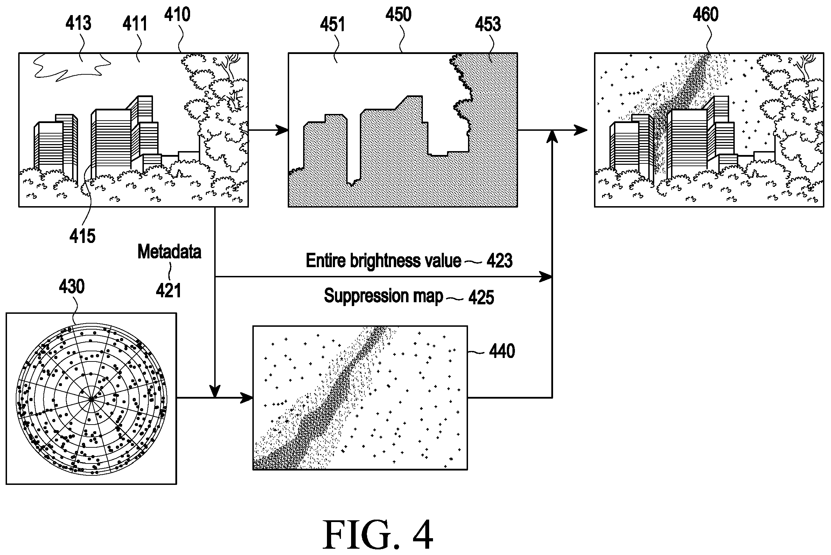

FIG. 4 is a diagram illustrating an operation of obtaining a third image 460 from a first image 410 by an electronic device (e.g., the electronic device 200 of FIG. 2) according to an embodiment of the disclosure.

According to an embodiment, a processor (e.g., the processor 240 of FIG. 2) may identify whether the first image 410 obtained by a camera module (e.g., the camera module 210 of FIG. 2) is an image that satisfies a predetermined condition. According to an embodiment, the processor 240 may determine the first image 410 that satisfies the condition as an input image for image synthesizing. The condition for determining an input image for image synthesizing may be whether an image includes night sky. According to an embodiment, the processor 240 may input the first image 410 into a previously trained image classification model The image classification model may previously train images including various objects. The trained image classification model may output one or more labels corresponding to one or more objects in the input image. Based on one or more labels output from the image classification model, the processor 240 may determine whether the first image 410 is an image including night sky.

According to an embodiment, based on identifying that the first image 410 is an image including night sky, the processor 240 may identify one or more objects in the first image 410. The processor 240 may identify one or more objects in the first image 410 according to operation 301 of FIG. 3. According to an embodiment, based on image segmentation, the processor 240 may identify night sky 411, clouds 413, and buildings 415 with lighting on in the first image 410.

According to an embodiment, the processor 240 may generate at least one suppression map 425 associated with at least one object among the one or more objects identified from the first image 410. The processor 240 may generate at least one suppression map 425 associated with at least one object that affects brightness of celestial objects among the one or more objects identified from the first image 410, according to operation 303 of FIG. 3. For example, a user may recognize that celestial objects located in a surrounding region of the buildings in the first image 410 are dark due to a high brightness value of the buildings 415 with lighting on. The user may vaguely recognize celestial objects hidden by the clouds 413 in the first image. According to an embodiment, the processor 240 may generate the suppression map 425 associated with each of the clouds 413 and the buildings 415 in order to adjust a brightness value of at least part of the celestial objects included in a second image 440. A region including at least one object that affects the brightness of celestial objects may be referred to as "first region".

According to an embodiment, the processor 240 may extract (or obtain) an image of regions 451 including predetermined objects from the first image 410. The processor 240 may classify the first image 410 into the regions 451 including predetermined objects and regions 453 excluding predetermined objects. According to an embodiment, the regions including predetermined objects may be referred to as "second region". The processor 240 may generate a mask image by excluding a pixel value of the regions 453 excluding the predetermined objects from the first image 410. For example, the processor 240 may generate a mask image from the first image 410 by extracting an image of the regions 451 including the night sky 411 and clouds 413.

According to an embodiment, based on the 3D model 430 and metadata 421 included in the first image 410, the processor 240 may obtain a partial area of the surface of the 3D model 430 and may generate the second image 440. The processor 240 may determine a composition of the first image 410 based on the metadata 421 according to operation 305 of FIG. 3. The processor 240 may generate the second image 440 by projecting the surface of the 3D model 430 onto an image plane in substantially the same size as the first image 410. The processor 240 may obtain a realistic celestial object image by extracting, from the 3D model 430, celestial objects which are observable at a date and place at which the first image 410 is captured.

According to an embodiment, based on an entire brightness value of the first image 410, the processor 240 may change an entire brightness value of the second image 440. The processor 240 may obtain (or extract) lightness values of the pixels of the first image 410. The processor 240 may obtain the entire brightness value of the first image 410 by calculating a representative (e.g., median, mode, or mean) value of the lightness values of the pixels. The processor 240 may change the entire brightness value of the second image 440 in reverse proportional to the entire brightness value of the first image 410. For example, as the entire brightness value of the first image 410 is lower, the processor 240 may relatively increase the entire brightness value of the second image 440. As the entire brightness value of the first image 410 is higher, the processor 240 may relatively decrease the entire brightness value of the second image 440. Based on the entire brightness value of the first image 410, the processor 240 may obtain a more realistic celestial object image by adjusting the entire brightness value of the second image 440.

According to an embodiment, based on at least one suppression map corresponding to at least one object included in the first region, the processor 240 may adjust the brightness value of at least partial area of the second image 440. The processor 240 may adjust a pixel value of a value map of the second image 440 based on a suppression map according to operation 307 of FIG. 3. For example, based on a pixel value of a suppression map associated with the clouds 413 and a pixel value of a suppression map associated with the buildings 415, the processor 240 may adjust the pixel value of the value map of the second image. Based on the pixel value of each suppression map, the processor 240 may dramatically decrease a pixel value of a value map corresponding to a region adjacent to the clouds 413 and buildings 415. By adjusting a lightness value of a partial area of the second image 440 based on a suppression map obtained from the first image 410, the processor 240 may obtain a realistic celestial object image.

According to an embodiment, the processor 240 may obtain (or generate) the third image 460 by synthesizing the second image 440 with the second region 451 of a mask image 450. The processor 240 may obtain the third image 460 by synthesizing, with the second region 451 of the first image 410, the second image 440 of which the pixel value is changed according to operation 309 of FIG. 3. By synthesizing the first image 410 and the second image 440 based on a weight value operation, the processor 240 may provide the third image 460 in which the objects of the first image 410 and the celestial objects of the second image 440 are naturally synthesized.

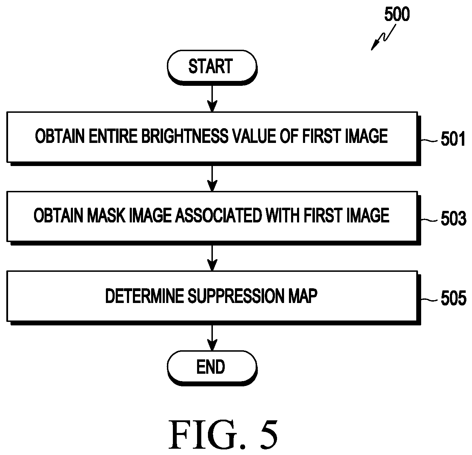

FIG. 5 is a flowchart 500 illustrating an operation of obtaining, from a first image (e.g., the first image 410 of FIG. 4), a suppression map for determining a pixel value of a second image (e.g., the second image 440 of FIG. 4), by the electronic device 200 according to an embodiment of the disclosure.

In the embodiment provided hereinafter, operations may be performed sequentially, but the order is not necessarily sequential. For example, the order of operations may be changed, and at least two operations may be performed in parallel.

According to an embodiment, it is understood that operations 501 to 505 are performed by at least one processor (e.g., the processor 240 of FIG. 2) of an electronic device (e.g., the electronic device 200 of FIG. 2).

Referring to FIG. 5, in operation 501, according to an embodiment, the processor 240 may obtain an entire brightness value of the first image 410.

According to an embodiment, the processor 240 may obtain (or extract) lightness values of the pixels of the first image 410. For example, the processor 240 may obtain HSV values of the pixels by traversing the pixels of the first image 410. The processor 240 may obtain a lightness value of each pixel from the HSV values of the pixels. The processor 240 may obtain the entire brightness value of the first image 410 by calculating a representative (e.g., median, mode, or mean) value of the lightness values of the pixels.

In operation 503, according to an embodiment, the processor 240 may obtain a mask image (e.g., the mask image 450 of FIG. 4) associated with the first image 410.

According to an embodiment, the processor 240 may extract (or obtain), from the first image 410, an image of regions (e.g., the second region 451 of FIG. 4) including predetermined objects. According to an embodiment, the processor 240 may obtain (or generate) the mask image 450 by excluding a pixel value of the regions (e.g., the regions 453 of FIG. 4) excluding predetermined objects from the first image 410. For example, the processor 240 may generate the mask image 450 from the first image 410 by extracting an image of the regions 451 including the night sky 411 and clouds 413.

In operation 505, according to an embodiment, the processor 240 may determine at least one suppression map corresponding to at least one predetermined object from among objects identified in the first image 410.

According to an embodiment, the operation of determining a suppression map by the processor 240 may correspond to operation 303 of FIG. 3. Based on at least one of operations 501, 503, and 505, the processor 240 may provide information for adjusting (or processing) a celestial object image (e.g., the second image 440 of FIG. 4).

FIG. 6 is a flowchart 600 illustrating an operation of synthesizing the first image 410 and the second image 440 based on information obtained from the first image 410, by the electronic device 200 (e.g., the processor 240 of FIG. 2) according to an embodiment of the disclosure.

Referring to FIG. 6, in operation 601, according to an embodiment, the processor 240 may adjust an entire brightness value of the second image 440.

According to an embodiment, based on the entire brightness value of the first image 410, the processor 240 may adjust the entire brightness value of the second image 440. For example, as the entire brightness value of the first image 410 is higher, the processor 240 may decrease a brightness value of the second image 440. As the entire brightness value of the first image 410 is lower, the processor 240 may increase the brightness value of the second image 440. According to an embodiment, the processor 240 may obtain a ratio of the brightness value of the first image 410 to a predetermined reference brightness value. The processor 240 may adjust the entire brightness value of the second image 440 by multiplying each of the pixels in a value map obtained from the second image 440 by the brightness value ratio.

In operation 603, according to an embodiment, the processor 240 may determine a brightness value of a partial area of the second image 440 based on a suppression map.

According to an embodiment, an operation in which the processor 240 determines the brightness value of the partial area of the second image 440 based on the suppression map may correspond to operation 307. By adjusting a lightness value of a partial area of the second image 440 based on a suppression map obtained from the first image 410, the processor 240 may obtain a realistic celestial object image.

In operation 605, according to an embodiment, the processor 240 may synthesize the first image 410 and the second image 440 with respect to a mask region.

According to an embodiment, the processor 240 may obtain a mask region (e.g., the region 451 including a predetermined object of FIG. 4) by excluding (or deleting), from the first image 410, a pixel value of a region excluding a predetermined object. For example, the processor 240 may obtain a pixel value of a region including night sky (e.g., the night sky 411 of FIG. 4) and clouds (e.g., the clouds 413 of FIG. 4). The processor 240 may perform a weighted summation of the second image 440 of which the lightness value is adjusted and the first image 410 with respect to the mask region. The processor 240 may use the pixel value of the first image 410 as it is, with respect to a region excluding the mask region. For example, the processor 240 may synthesize a night sky image of the first image 410 and a celestial object image of the second image 440 with respect to a region including the night sky 411 and clouds 413.

In operation 607, according to an embodiment, the processor 240 may adjust a brightness value of a boundary of the mask region.

According to an embodiment, the processor 240 may obtain a third image (e.g., the second image 460 of FIG. 3) by adjusting a brightness value of a region corresponding to the boundary of the mask region in the synthesis image obtained according to operation 605. According to an embodiment, the processor 240 may obtain an average brightness value of adjacent pixels located inside and outside the mask region. Based on a representative (e.g., median, mode, or mean) brightness value of the adjacent pixels, the processor 240 may adjust brightness values of pixels located in the boundary. According to an embodiment, an operation of adjusting the brightness values of the pixels located in the boundary of the mask region may be referred to as "blending". The processor 240 may improve the quality of the third image 460 obtained by synthesizing the first image 410 and the second image 440 based on at least one of

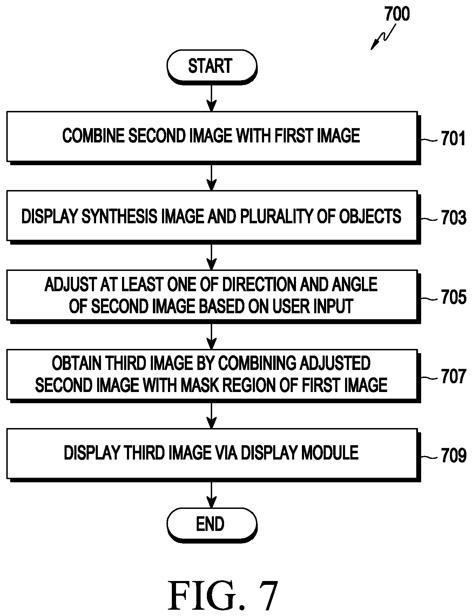

FIG. 7 is a flowchart 700 illustrating an operation of adjusting a composition of a second image based on a user input, by an electronic device according to an embodiment of the disclosure.

In the embodiment provided hereinafter, operations may be performed sequentially, but the order is not necessarily sequential. For example, the order of operations may be changed, and at least two operations may be performed in parallel.

According to an embodiment, it is understood that operations 701 to 509 are performed by at least one processor (e.g., the processor 240 of FIG. 2) of an electronic device (e.g., the electronic device 200 of FIG. 2).

Referring to FIG. 7, in operation 701, according to an embodiment, the processor 240 may synthesize a first image (e.g., the first image 410 of FIG. 4) and a second image (e.g., the second image 440 of FIG. 4).

According to an embodiment, the processor 240 may synthesize the second image 440 with the first image 410 by superposing the second image 440 onto the first image 410. According to an embodiment, from the synthesis image, the processor 240 may separate a pixel value of the second image 440 corresponding to a second region (e.g., the second region 451 of FIG. 4) and a pixel value of the first image 410 corresponding to a region (e.g., the region 453 of FIG. 4) excluding the second region. The processor 240 may separate the pixel value of the second image 440 from the synthesis image, and thus may adjust a composition of the second image 440 based on a user input.

In operation 703, according to an embodiment, the processor 240 may display the synthesis image and a plurality of objects via a display module (e.g., the display module 220 of FIG. 2).

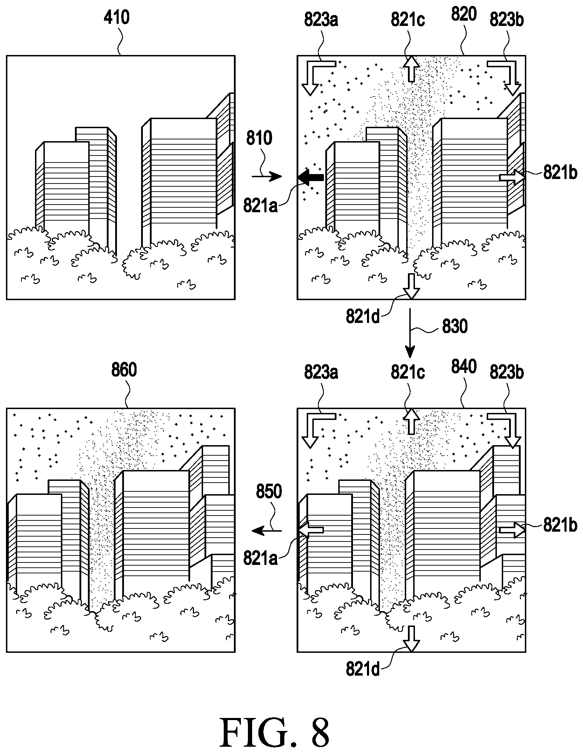

According to an embodiment, the processor 240 may perform control so that the display module 220 displays a plurality of objects for changing the composition of the second image 440 in the synthesis image. The plurality of objects that the processor 240 displays via the display module 220 will be described with reference to FIG. 8.

In operation 705, according to an embodiment, the processor 240 may adjust at least one of the direction and angle of the second image 440 based on a user input.

According to an embodiment, based on a user input, the processor 240 may adjust the composition of the second image 440 determined based on the composition of the first image 410. The processor 240 may change at least one of the direction and angle of the second image 440 based on a user input. A detailed example in which the processor 240 changes at least one of the direction and angle of the second image 440 based on a user input will be described with reference to FIG. 8. According to an embodiment, the processor 240 may adjust the pixel value of the second image 440 based on a user input.

In operation 707, according to an embodiment, the processor 240 may obtain a third image (e.g., the third image 460 of FIG. 4) by synthesizing the adjusted second image 440 with the mask region of the first image 410.

According to an embodiment, the operation in which the processor 240 synthesizes the second image 440 with the first image 410 may correspond to operation 309 of FIG. 3.

In operation 709, according to an embodiment, the processor 240 may display the obtained third image 460 via the display module 220.

According to an embodiment, the operation in which the processor 240 displays the obtained third image 460 via the display module 220 may correspond to operation 311 of FIG. 3. Based on at least one of operations 701, 703, 705, 707, and 709, the processor 240 may provide synthesis images including celestial object images in various compositions.

FIG. 8 is a diagram illustrating an operation of adjusting a composition of a second image based on a user input, by an electronic device according to an embodiment of the disclosure.

According to an embodiment, the processor 240 may provide celestial object images in various compositions, based on a user input to at least one of a plurality of objects 821a, 821b, 821c, 821d, 823a, and 823b.

According to an embodiment, referring to reference numeral 810, at least one processor (e.g., the processor 240 of FIG. 2) may obtain a synthesis image 820 by superposing a second image onto a first image (e.g., the first image 410 of FIG. 4). According to an embodiment, the second image may be an image including celestial objects. According to an embodiment, the processor 240 may obtain the second image based on metadata included in the first image 410 and a 3D model. According to an embodiment, the processor 240 may obtain the second image based on a user input and the 3D model. The user input may include information associated with a right ascension, a declination, and an angle for obtaining the second image. According to an embodiment, the user input may include information associated with GPS information, a date, a time, and an observation direction. According to an embodiment, the processor 240 may store one or more second images generated in advance.

According to an embodiment, the processor 240 may display the synthesis image 820 and the plurality of objects 821a, 821b, 821c, 821d, 823a, and 823b via a display. The plurality of objects may be buttons for adjusting the direction or angle of the second image. For example, the processor 240 may adjust the direction of the second image based on a user input to the object 821a for moving the second image to the left, the object 821b for moving the second image to the right, the object 821c for moving the second image upward, or the object 821d for moving the second image downward. The processor 240 may adjust the angle of the second image based on the object 823a for rotating the angle of the second image counterclockwise, or the object 823b for rotating the angle of the second image clockwise.

According to an embodiment, based on a user input to the object 821a for moving the second image to the left, the processor 240 may display a synthesis image in which the second image is moved to the left via the display module 220. According to an embodiment, in order to change the composition of the second image, the processor 240 may obtain the second image corresponding to the changed composition from the 3D model.

According to an embodiment, referring to reference numeral 850, the processor 240 may synthesize, based on a user input, the second image of which the composition is changed with the mask region of the first image 410, and may obtain the third image 860.

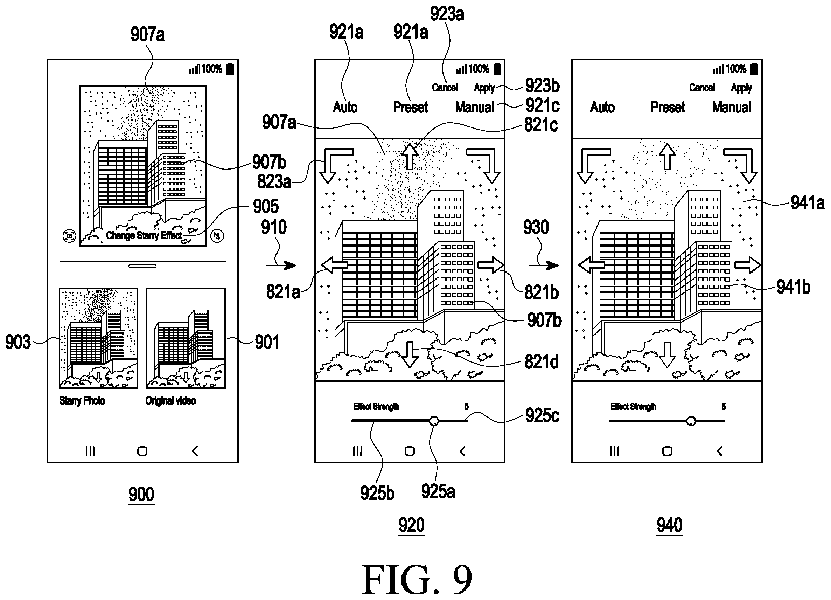

FIG. 9 is a diagram illustrating an operation of changing an effect applied to a recommended image 903, by the electronic device 200 according to an embodiment of the disclosure.

According to an embodiment, at least one processor (e.g., the processor 240 of FIG. 2) may change an effect applied to the recommended image 903 based on a user input. The processor 240 may obtain the recommended image 903 by applying a celestial object image effect to a representative image 901.

According to an embodiment, referring to reference numeral 900, the processor 240 may obtain the representative image 901 from an input video obtained by a camera module (e.g., the camera module 210 of FIG. 2). Based on the representative image 901, the processor 240 may obtain one or more images to which an effect is applied such as a color filter, an augmented reality filter, a portrait filter, or the like.

According to an embodiment, the processor 240 may identify whether the representative image 901 includes night sky based on image classification. Based on identifying that the representative image 901 includes night sky, the processor 240 may display, via the display module 220, the recommended image 903 obtained by applying a celestial object image effect to the representative image 901.

According to an embodiment, the processor 240 may obtain an entire brightness value of the representative image 901. The processor 240 may obtain at least one suppression map corresponding to at least one predetermined object among objects identified from the representative image 901. The processor 240 may segment the representative image 901 as a foreground including night sky and clouds and a background excluding the foreground. The processor 240 may obtain a pixel value of the foreground. The processor 240 may store the obtained entire brightness value of the representative image 901, at least one suppression map, and the pixel value of the foreground.

According to an embodiment, the processor 240 may obtain the recommended image 903 obtained by applying the celestial object image effect to a foreground 907a based on metadata included in the representative image 901 and a 3D model. According to an embodiment, the processor 240 may determine a composition of a celestial object image based on a time at which the representative image 901 is captured, GPS information of the electronic device 200, and a gyro sensor value obtained when the representative image 901 is captured. To determine the composition of the celestial object image, the processor 240 may further use an acceleration sensor value including information associated with the direction of the camera module 210. According to an embodiment, the processor 240 may extract a partial area of the surface of the 3D model based on the determined composition, and may obtain a celestial object image. The processor 240 may obtain the recommended image 903 by synthesizing the celestial object image with the foreground 907a of the representative image 901.

According to an embodiment, the processor 240 may display the obtained recommended image 903 via a display module (e.g., the display 220 of FIG. 2). Based on a user input to an object 905 for adjusting the effect applied to the recommended image 903, the processor 240 may display a screen for adjusting the celestial object image effect applied to the foreground 907a of the recommended image 903 as shown by reference numeral 910. The user input may be an operation of touching an object displayed via the display module 220. According to an embodiment, the processor 240 may maintain a background 907b of the recommended image.

According to an embodiment, referring to reference numeral 920, the processor 240 may display one or more objects 921a, 921b, and 921c related to a scheme of determining a composition of a celestial object image. According to an embodiment, based on a user input to the auto object 921a, the processor 240 may display the composition of a celestial object image corresponding to a time and place at which the representative image 901 is captured in the foreground 907a of the recommended image 903. According to an embodiment, based on a user input to the preset object 921b, the processor 240 may display one of the compositions of celestial object images stored in advance in the foreground 907a of the recommended image 903. According to an embodiment, based on a user input to the manual object 921c, the processor 240 may display one or more objects 821a, 821b, 821c, 821d, 823a, and 823b for adjusting a composition of a celestial object image. The processor 240 may adjust at least one the direction and the angle of a celestial object image based on a user input to at least one of the one or more objects 821a, 821b, 821c, 821d, 823a, and 823b. According to an embodiment, the processor 240 may adjust a composition of a celestial object image by extracting a partial area of the surface of the 3D model based on a date, time, a right ascension, and a declination included in a user input. According to an embodiment, based on a user input to the auto object 921a, the processor 240 may adjust a composition of a celestial image from a predetermined composition or a composition determined based on a user input to a composition determined based on the metadata of the representative image 901. According to an embodiment, based on a user input to a cancel object 923a, the processor 240 may cancel an adjusted celestial image effect. According to an embodiment, based on a user input to an apply object 923b, the processor 240 may apply an adjusted celestial image effect.

According to an embodiment, based on a user input to a dial object 925a, the processor 240 may adjust strength of a celestial object image effect. According to an embodiment, the strength of the effect may be brightness of one or more celestial objects included in a celestial object image. For example, the processor 240 may adjust the strength of the celestial object image effect by increasing or decreasing a brightness value of celestial objects of a celestial object image. According to an embodiment, the processor 240 may adjust the strength of the celestial object image effect in proportional to the length of a slid 925b in a slid bar 925c displayed via the display module 220. According to an embodiment, referring to reference numeral 930, the processor 240 may decrease, based on a user input to the dial object 925a, the strength of the celestial object image effect.

According to an embodiment, referring to reference numeral 940, the processor 240 may display a celestial object image in which the strength of the effect to the foreground 941a is decreased. The processor 240 may maintain a background 941b of the representative image.

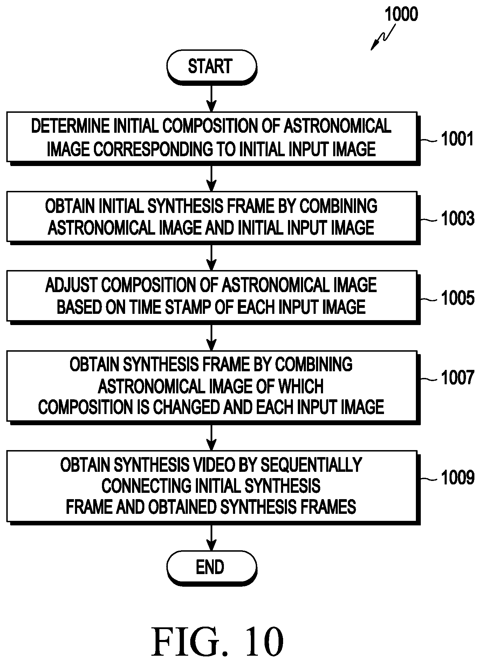

FIG. 10 is a flowchart 1000 illustrating an operation of obtaining a synthesis video based on one or more input images, by the electronic device 200 according to an embodiment of the disclosure.

In the embodiment provided hereinafter, operations may be performed sequentially, but the order is not necessarily sequential. For example, the order of operations may be changed, and at least two operations may be performed in parallel.

According to an embodiment, it is understood that operations 1001 to 1009 are performed by at least one processor (e.g., the processor 240 of FIG. 2) of an electronic device (e.g., the electronic device 200 of FIG. 2).

According to an embodiment, the processor 240 may generate one or more astronomical images (or celestial object images) by adjusting their compositions based on time stamps of the one or more input images, and may obtain a synthesis video.

Referring to FIG. 10, in operation 1001, according to an embodiment, the processor 240 may determine an initial composition of an astronomical image (or a celestial object image) corresponding to an initial input image.

According to an embodiment, based on metadata of the initial input image obtained by a camera module (e.g., the camera module 210 of FIG. 2), the processor 240 may determine the initial composition of the celestial object image corresponding to the initial input image. The processor 240 may determine the composition of the celestial object image based on the initial input image and a 3D model according to operation 305 of FIG. 3.

In operation 1003, according to an embodiment, the processor 240 may synthesize the initial input image and the astronomical image (or celestial object image), so as to obtain an initial synthesis frame.

According to an embodiment, the processor 240 may synthesize a celestial object image generated based on the determined initial composition with a region including the sky and clouds of the initial input image, and may obtain the initial synthesis frame.

In operation 1005, according to an embodiment, the processor 240 may adjust the composition of the astronomical image (or celestial object image) based on a time stamp of each of the one or more input images.

According to an embodiment, the processor 240 may provide an effect of moving celestial objects in the celestial object image over time by adjusting, based on a time change according to a time stamp, the composition of the celestial object image from the initial composition of the celestial object image.

In operation 1007, according to an embodiment, the processor 240 may synthesize one or more input images and astronomical images (or celestial images) of which compositions are adjusted based on time stamps of corresponding input images, thereby obtaining one or more synthesis frames.

According to an embodiment, based on a mask image and at least one suppression map obtained from the initial input image, the processor 240 may change a pixel value of a part of each of the one or more celestial object images of which the compositions are adjusted. The processor 240 may synthesize the one or more input images with celestial object images that respectively correspond to the input images, thereby obtaining the one or more synthesis frames.

In operation 1009, according to an embodiment, the processor 240 may sequentially connect the initial synthesis frame and the obtained synthesis frames, and may obtain a synthesis video.

According to an embodiment, the processor 240 may sequentially connect the initial synthesis frame and the obtained synthesis frames according to the time based on the time stamps, and may obtain the synthesis video.

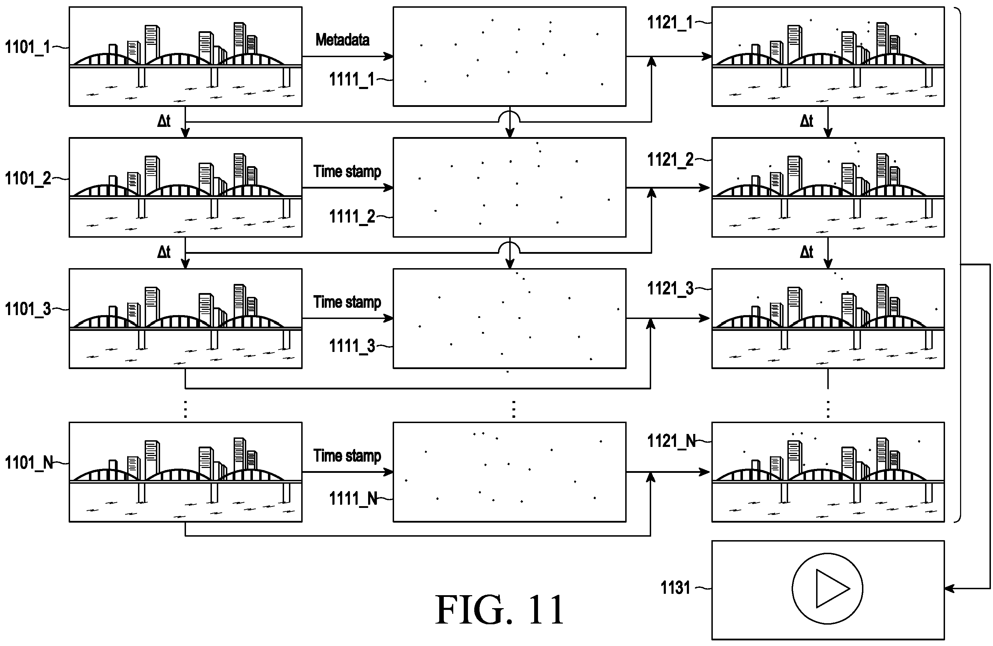

FIG. 11 is a diagram illustrating an operation of obtaining a synthesis video based on a plurality of input images, by an electronic device according to an embodiment of the disclosure.

According to an embodiment, based on metadata of an initial input image 1101_1 obtained by a camera module (e.g., the camera module 210 of FIG. 2), at least one processor (e.g., the processor 240 of FIG. 2) may determine an initial composition of a celestial object image 1111_1 corresponding to the initial input image 1101_1. The processor 240 may determine the initial composition of the celestial obj ect image 1111_1 based on the initial input image 1101_1 and a 3D model according to operation 305 of FIG. 3.

According to an embodiment, the processor 240 may synthesize the celestial object image 1111_1 generated based on the determined initial composition with a region including the sky and clouds of the initial input image 1101_1, and may obtain an initial synthesis frame 1121_1.

According to an embodiment, the processor 240 may provide an effect of moving celestial objects in the celestial object image over time by adjusting, based on a time change according to a time stamp, the composition of the celestial object image from the initial composition of the celestial object image 1111_1.

According to an embodiment, based on a mask image and at least one suppression map obtained from the initial input image 1101_1, the processor 240 may change a pixel value of part of each of the one or more celestial object images 1111_2 and 1111_3 to 1111_N of which the compositions are adjusted. The processor 240 may synthesize the one or more input images 1101_2, and 1101_3 to 1101_N and celestial object images that respectively correspond to the input images, thereby obtaining one or more synthesis frames 1121_2, and 1121_3 to 1121_N.

According to an embodiment, the processor 240 may sequentially connect the initial synthesis frame 1121_1 and the obtained synthesis frames 1121_2 and 1121_3 to 1121_N according to the time based on the time stamps, and may obtain a synthesis video.

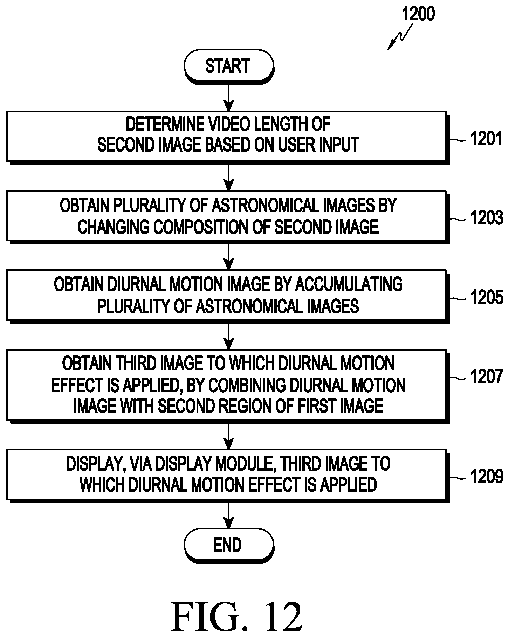

FIG. 12 is a flowchart 1200 illustrating an operation of obtaining a synthesis image to which a diurnal motion effect is applied, by the electronic device 200 according to an embodiment of the disclosure.

In the embodiment provided hereinafter, operations may be performed sequentially, but the order is not necessarily sequential. For example, the order of operations may be changed, and at least two operations may be performed in parallel.

According to an embodiment, it is understood that operations 1201 to 1209 are performed by at least one processor (e.g., the processor 240 of FIG. 2) of an electronic device (e.g., the electronic device 200 of FIG. 2).

According to an embodiment, the processor 240 may obtain a third image to which a diurnal motion effect is applied by accumulating, in a first image obtained in advance, one or more astronomical images (or celestial object images) of which compositions are adjusted. The processor 240 may provide the third image to which a long exposure effect is applied, without time and place restrictions.

Referring to FIG. 12, in operation 1201, according to an embodiment, the processor 240 may determine a video length of a second image based on a user input.

According to an embodiment, the processor 240 may determine strength of the diurnal motion effect based on the video length of the second image. According to an embodiment, a user input may include information associated with a diurnal motion time.

In operation 1203, according to an embodiment, the processor 240 may obtain a plurality of astronomical images (or celestial object images) by changing a composition of the second images.

According to an embodiment, the processor 240 may change the composition of the second image at predetermined time intervals based on the determined video length, and may obtain one or more celestial object images. According to an embodiment, the processor 240 may determine an initial composition of the second image based on metadata of a first image and a 3D model according to operation 305 of FIG. 3. The processor 240 may change the composition of the second image based on a time stamp that changes at predetermined time intervals.

In operation 1205, according to an embodiment, the processor 240 may accumulate a plurality of astronomical images (or celestial object images), and may obtain a diurnal motion image.

According to an embodiment, the processor 240 may accumulate the one or more obtained celestial object images, and may obtain a single diurnal motion image.

In operation 1207, according to an embodiment, the processor 240 may obtain a third image to which the diurnal motion effect is applied by synthesizing the diurnal motion image with a second region of the first image.

According to an embodiment, the processor 240 may synthesize the obtained diurnal motion image with at least some regions including clouds and night sky in the first image, and may obtain the third image to which the diurnal motion effect is applied.

In operation 1209, according to an embodiment, the processor 240 may display the third image to which the diurnal motion effect is applied via the display module 220.

According to an embodiment, the processor 240 may provide a synthesis image without time and space restrictions by applying, to the first image obtained in the past, the diurnal motion effect of celestial objects in a virtual perspective view.

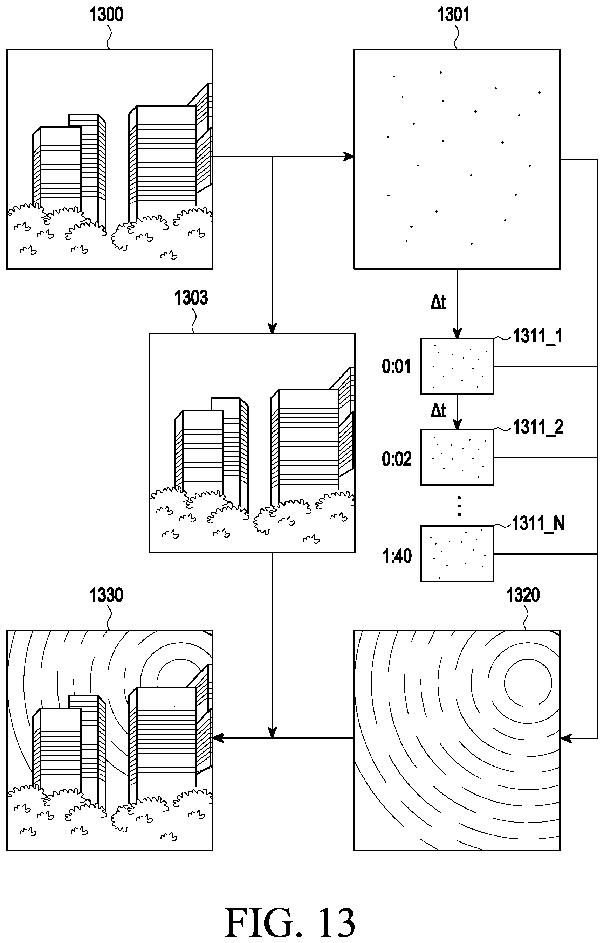

FIG. 13 is a diagram illustrating an operation of obtaining a synthesis image to which a diurnal motion effect is applied, by an electronic device according to an embodiment of the disclosure.

According to an embodiment, at least one processor (e.g., the processor 240 of FIG. 2) may provide a third image 1330 without time and space restrictions by applying, to a first image 1300 obtained in the past, a diurnal motion effect of celestial objects in a virtual perspective view.

According to an embodiment, the processor 240 may determine a video length of a second image 1301 based on a user input. According to an embodiment, a user input may include information associated with a diurnal motion time.

According to an embodiment, the processor 240 may obtain one or more celestial object images 1311_1 and 1311_2 to 1311_N by changing a composition of the second image 1301 at predetermined time intervals (Δt) based on the determined video length. According to an embodiment, the processor 240 may determine an initial composition of the second image based on metadata of the first image 1300 and a 3D model according to operation 305 of FIG. 3. The processor 240 may change the composition of the second image based on a time stamp that changes at predetermined time intervals. According to an embodiment, the processor 240 may obtain a single diurnal motion image 1320 by accumulating the one or more obtained celestial object images 1311_1 and 1311_2 to 1311_N.

According to an embodiment, the processor 240 may synthesize the obtained diurnal motion image 1320 with at least some regions 1303 including clouds and night sky in the first image 1300, and may obtain the third image 1330 to which the diurnal motion effect is applied. The processor 240 may display the third image 1330 to which the diurnal motion effect is applied via a display module (e.g., the display module 220 of FIG. 2).

An electronic device 101 or 200 according to an embodiment may include a camera module 180 or 210 including a camera, a display module 160 or 220 including a display, at least one processor 120 or 240 comprising processing circuitry that is operatively connected to the camera module 180 or 210 and the display module 160 or 220, and memory storing instructions. The instructions, when executed by the at least one processor 120 or 240, may cause the electronic device to identify one or more objects in the first image 410. Based on pixel values of regions respectively corresponding to the one or more identified objects, the instructions, when executed by the at least one processor 120 or 240, may cause the electronic device to determine at least one map related to a pixel value of a first region of the first image 410. The instructions, when executed by the at least one processor 120 or 240, may cause the electronic device to generate the second image 440 based on metadata of the first image 410, a user input for determining a composition of the second image 440, or the 3D model 430. Based on the at least one determined map, the instructions, when executed by the at least one processor 120 or 240, may cause the electronic device to change a pixel value of at least partial area of the second image 440 that corresponds to the first region. The instructions, when executed by the at least one processor 120 or 240, may cause the electronic device to obtain the third image 460 by synthesizing the second image 440 in which the pixel value is changed with the second region of the first image 410. The instructions, when executed by the at least one processor 120 or 240, may cause the electronic device to display the third image 460 via the display module 160 or 220.

The instructions, when executed by the at least one processor 120 or 240, may cause the electronic device to input the first image 410 into a previously trained image classification model. Based on an output of the image classification model, the instructions, when executed by the at least one processor 120 or 240, may cause the electronic device to identify whether the first image 410 includes at least one predetermined object. The instructions, when executed by the at least one processor 120 or 240, may cause the electronic device to identify one or more objects in the first image 410 based on identifying that the first image 410 includes the at least one predetermined object.

The instructions, when executed by the at least one processor 120 or 240, may cause the electronic device to obtain an entire brightness value of the first image 410 based on a pixel value of the first image 410. Based on the obtained entire brightness value of the first image 410, the instructions, when executed by the at least one processor 120 or 240, may cause the electronic device to change an entire brightness value of the second image 440.

The instructions, when executed by the at least one processor 120 or 240, may cause the electronic device to obtain a value map corresponding to the second image 440 based on the pixel value of the second image 440. The instructions, when executed by the at least one processor 120 or 240, may cause the electronic device to adjust a pixel value included in the value map based on a lightness value of the at least one map related to the pixel value of the first region.

The instructions, when executed by the at least one processor 120 or 240, may cause the electronic device to identify whether the one or more identified objects include the at least one predetermined object. Based on identifying that the one or more identified objects include the at least one predetermined object, the instructions, when executed by the at least one processor 120 or 240, may cause the electronic device to determine at least one region corresponding to the at least one predetermined object. The instructions, when executed by the at least one processor 120 or 240, may cause the electronic device to generate the mask image 450 by obtaining a pixel value of the at least one determined region.

The 3D model may include information associated with locations and pixel values of one or more celestial objects.

The instructions, when executed by the at least one processor 120 or 240, may cause the electronic device to synthesize the second image 440 with the first image 410. The instructions, when executed by the at least one processor 120 or 240, may cause the electronic device to display the synthesis image and a plurality of objects via the display module 160 or 220. The instructions, when executed by the at least one processor 120 or 240, may cause the electronic device to adjust at least one of the direction and angle of the second image 440 based on a user input to at least one of the plurality of objects. The instructions, when executed by the at least one processor 120 or 240, may cause the electronic device to obtain the third image 460 by synthesizing the adjusted second image 440 with at least some of the regions of the first image 410. The instructions, when executed by the at least one processor 120 or 240, may cause the electronic device to display the third image 460 via the display module 160 or 220.

The instructions, when executed by the at least one processor 120 or 240, may cause the electronic device to detect a user input to one of the plurality of objects. The instructions, when executed by the at least one processor 120 or 240, may cause the electronic device to adjust the pixel value of the second image 440 based on the detected user input.

Based on metadata of the initial input image 1101_1 obtained by the camera module 180 or 210, the instructions, when executed by the at least one processor 120 or 240, may cause the electronic device to determine an initial composition of the celestial image 1111_1 corresponding to the initial input image 1101_1. The instructions, when executed by the at least one processor 120 or 240, may cause the electronic device to obtain the initial synthesis frame 1121_1 by synthesizing the celestial object image 1111_1 generated based on the determined initial composition with the initial input image 1101_1. The instructions, when executed by the at least one processor 120 or 240, may cause the electronic device to adjust the composition of the celestial object image 1111_1 based on a time stamp of each of the one or more input images 1101_N further obtained by the camera module 180 or 210. The instructions, when executed by the at least one processor 120 or 240, may cause the electronic device to obtain one or more synthesis frames 1121_N by synthesizing each of the one or more input images 1101_N with respective celestial object image 1111_N of which the composition is adjusted based on each time stamp. The instructions, when executed by the at least one processor 120 or 240, may cause the electronic device to obtain a synthesis video 1131 by sequentially connecting the initial synthesis frame 1121_1 and the obtained synthesis frames 1121_N.

The instructions, when executed by the at least one processor 120 or 240, may cause the electronic device to determine a video length of the second image 440 or 1301 based on a user input. The instructions, when executed by the at least one processor 120 or 240, may cause the electronic device to obtain one or more celestial object images 1311_N by changing the composition of the second image 440 or 1301 at predetermined time intervals based on the determined video length. The instructions, when executed by the at least one processor 120 or 240, may cause the electronic device to obtain the diurnal motion image 1320 by accumulating the one or more obtained celestial object images 1311_N. The instructions, when executed by the at least one processor 120 or 240, may cause the electronic device to obtain the third image 1330 to which a diurnal motion effect is applied, by synthesizing the obtained diurnal motion image 1320 with at least part of the regions of the first image 410. The instructions, when executed by the at least one processor 120 or 240, may cause the electronic device to display the third image 1330 to which the diurnal motion effect is applied via the display module 160 or 220.

An image synthesizing method of the electronic device 101 or 200 may include an operation of identifying one or more objects in the first image 410. The method may include an operation of determining at least one map related to a pixel value of a first region of the first image 410, based on pixel values of regions respectively corresponding to the one or more identified objects. The method may include an operation of generating the second image 440 based on at least one of metadata of the first image 410, a user input for determining a composition of the second image 440, or the three-dimensional (3D) model 430. The method may include an operation of changing, based on the at least one determined map, a pixel value of at least partial area of the second image 440 that corresponds to the first region. The method may include an operation of obtaining the third image 460 by synthesizing, with a second region of the first image 410, the second image 440 in which the pixel value is changed. The method may include an operation of displaying the third image 460 via the display module 160 or 220.

The method may include an operation of inputting the first image 410 into a previously trained image classification model. The method may include an operation of identifying whether the first image 410 includes at least one predetermined object, based on an output of the image classification model. The method may further include an operation of identifying one or more objects in the first image 410 based on identifying that the first image 410 includes the at least one predetermined object.

The method may include an operation of obtaining an entire brightness value of the first image 410 based on a pixel value of the first image 410. The method may further include an operation of changing an entire brightness value of the second image 440 based on the obtained entire brightness value of the first image 410.

The method may include an operation of obtaining a value map corresponding to the second image 440 based on a pixel value of the second image 440. The method may further include an operation of adjusting a pixel value included in the value map based on a lightness value of the at least one map related to the pixel value of the first region.

The method may include an operation of identifying whether the one or more identified objects include at least one predetermined object. The method may include an operation of determining at least one region corresponding to the at least one predetermined object based on identifying that the one or more identified objects include the at least one predetermined object. The method may further include an operation of generating the mask image 450 by obtaining a pixel value of the at least one determined region.

In the method, the 3D model 430 may include information associated with locations and pixel values of one or more celestial objects.

The method may further include an operation of synthesizing the second image 440 with the first image 410. The method may include an operation of displaying the synthesis image and a plurality of objects via the display module 160 or 220. The method may include an operation of adjusting at least one of a direction and an angle of the second image 440 based on a user input to at least one of the plurality of objects. The method may include an operation of obtaining the third image 460 by synthesizing the adjusted second image 440 with at least some of the regions of the first image 410.

The method may further include an operation of displaying the third image 460 via the display module 160 or 220. The method may include an operation of detecting a user input to one of the plurality of objects. The method may further include an operation of adjusting the pixel value of the second image 440 based on the detected user input. The method may include an operation of determining an initial composition of the celestial object image 1111_1 corresponding to the initial input image 1101_1 based on metadata of the initial input image 1101_1 obtained by the camera module 180 or 210. The method may include an operation of obtaining the initial synthesis frame 1121_1 by synthesizing the celestial object image 1111_1 generated based on the determined initial composition with the initial input image 1101_1. The method may include an operation of adjusting the composition of the celestial object image 1111_1 based on a time stamp of each of the one or more input images 1101_N further obtained by the camera module 180, 210. The method may include an operation of obtaining the one or more synthesis frames 1121_N by synthesizing, with each of the one or more input images 1101_N, respective celestial object image 1111_N of which the composition is adjusted based on each time stamp. The method may further include an operation of obtaining the synthesis video 1131 by sequentially connecting the initial synthesis frame 1121_1 and the obtained synthesis frames 1121_N.

The method may include an operation of determining a video length of the second image 440 or 1301 based on a user input. The method may include an operation of obtaining one or more celestial object images 1311_N by changing the composition of the second image 440 or 1301 at predetermined time intervals based on the determined video length. The method may include an operation of obtaining the diurnal motion image 1320 by accumulating the one or more obtained celestial object images 1311_N. The method may include an operation of obtaining the third image 1330 to which a diurnal motion effect is applied, by synthesizing the obtained diurnal motion image 1320 with at least some of the regions of the first image 410. The method may further include an operation of displaying, via the display module 160 or 220, the third image 1330 to which the diurnal motion effect is applied.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Also, the structure of data used in the above-described embodiments of the disclosure may be recorded in a computer-readable recording medium via various means. The computer-readable recording medium may include a storage medium such as a magnetic storage medium (e.g., a ROM, floppy disk, hard disk, or the like) and an optical reading medium (e.g., a CD-ROM, DVD, or the like).

The disclosure has been described with reference to the embodiments. It would be appreciated by those skilled in the art that changes may be made to these embodiments within the scope of the appended claims.

## Claims

1. An electronic device (101, 200) comprising:
a camera module (180, 210) including a camera;
a display module (160, 220) including a display;
a memory (130, 230) storing instructions; and
at least one processor (120, 240) comprising processing circuitry, operatively connected to the camera module (180, 210), the display module (160, 220) and memory (130,230),
wherein the instructions, when executed by the at least one processor (120, 240) cause the electronic device to:
identify one or more objects in a first image (410),
based on pixel values of regions respectively corresponding to the one or more identified objects, determine at least one map related to a pixel value of a first region of the first image (410),
based on at least one of metadata of the first image (410), a user input for determining a composition of a second image (440), or a three-dimensional, 3D, model (430), generate the second image (440),
based on the at least one determined map, change a pixel value of at least a partial area of the second image (440) that corresponds to the first region,
obtain a third image (460) by synthesizing, with a second region of the first image (410), the second image (440) in which the pixel value is changed, and
display, via the display module (160, 220), the third image (460),
**characterized in that** the instructions, when executed by the at least one processor, cause the electronic device to:
identify whether the one or more identified objects include at least one predetermined object,
based on identifying that the one or more identified objects include the at least one predetermined object, determine at least one region corresponding to the at least one predetermined object, and
generate a mask image (450) by obtaining a pixel value of the at least one determined region.

2. The electronic device (101, 200) of claim 1, wherein the instructions, when executed by the at least one processor (120, 240) cause the electronic device to:
input the first image (410) into a previously trained image classification model,
based on an output of the image classification model, identify whether the first image (410) includes at least one predetermined object, and
based on identifying that the first image (410) includes the at least one predetermined object, identify one or more objects in the first image (410).

3. The electronic device (101, 200) of claim 1 or claim 2, wherein the instructions, when executed by the at least one processor (120, 240) cause the electronic device to:
based on a pixel value of the first image (410), obtain an entire brightness value of the first image (410), and
based on the obtained entire brightness value of the first image (410), change an entire brightness value of the second image (440).

4. The electronic device (101, 200) of any one of claims 1 to 3, wherein the instructions, when executed by the at least one processor (120, 240) cause the electronic device to:
based on a pixel value of the second image (440), obtain a value map corresponding to the second image (440), and
based on a lightness value of the at least one map related to the pixel value of the first region, adjust a pixel value included in the value map, wherein the lightness value of the at least one map is obtained from hue-saturation-value, HSV, values of pixels of the first region.

5. The electronic device (101, 200) of any one of claims 1 to 4, wherein the 3D model includes information associated with locations and pixel values of one or more celestial objects.

6. The electronic device (101, 200) of any one of claims 1 to 5, wherein the instructions, when executed by the at least one processor (120, 240) cause the electronic device to:
synthesize the second image (440) with the first image (410),
display, via the display module (160, 220), a synthesis image and a plurality of objects,
based on a user input to at least one of the plurality of objects, adjust at least one of a direction and an angle of the second image (440),
obtain the third image (460) by synthesizing the adjusted second image (440) with at least some of the regions of the first image (410), and
display, via the display module (160, 220), the third image (460).

7. The electronic device (101, 200) of any one of claims 1 to 6, wherein the instructions, when executed by the at least one processor (120, 240) cause the electronic device to:
detect a user input to one of the plurality of objects, and
based on the detected user input, adjust the pixel value of the second image (440).

8. The electronic device (101, 200) of any one of claims 1 to 7, wherein the instructions, when executed by the at least one processor (120, 240) cause the electronic device to:
based on metadata of an initial input image (1101_1) obtained by the camera module (180, 210), determine an initial composition of a celestial object image (1111_1) corresponding to the initial input image (1101_1),
obtain an initial synthesis frame (1121_1) by synthesizing the celestial object image (1111_1) generated based on the determined initial composition with the initial input image (1101_1),
based on a time stamp of each of one or more input images (1101_N) further obtained by the camera module (180, 210), adjust the composition of the celestial object image (1111_1),
obtain one or more synthesis frames (1121_N) by synthesizing, with each of the one or more input images (1101_N), a respective celestial object image (1111_N) of which the composition is adjusted based on each time stamp, and
obtain a synthesis video (1131) by sequentially connecting the initial synthesis frame (1121_1) and the obtained synthesis frames (1121_N).

9. The electronic device (101, 200) of any one of claims 1 to 8, wherein the instructions, when executed by the at least one processor (120, 240), cause the electronic device to:
determine a video length of the second image (440, 1301) based on an input,
based on the determined video length, obtain one or more celestial object images (1311_N) by changing the composition of the second image (440, 1301) at predetermined time intervals,
obtain a diurnal motion image (1320) by accumulating the one or more obtained celestial object images (1311_N),
obtain a third image (1330) to which a diurnal motion effect is applied, by synthesizing the obtained diurnal motion image (1320) with at least some of the regions of the first image (410), and
display, via the display module (160, 220), the third image (1330) to which the diurnal motion effect is applied.

10. An image synthesizing method of an electronic device (101, 200), the method comprising:
identifying one or more objects in a first image (410);
based on pixel values of regions respectively corresponding to the one or more identified objects, determining at least one map related to a pixel value of a first region of the first image (410);
based on at least one of metadata of the first image (410), a user input for determining a composition of a second image (440), or a three-dimensional, 3D, model (430), generating the second image (440);
based on the at least one determined map, changing a pixel value of at least a partial area of the second image (440) that corresponds to the first region;
obtaining a third image (460) by synthesizing, with a second region of the first image (410), the second image (440) in which the pixel value is changed; and
displaying, via a display module (160, 220), the third image (460),
**characterized in that** the method further comprises:
identifying whether the one or more identified objects include at least one predetermined object;
based on identifying that the one or more identified objects include the at least one predetermined object, determining at least one region corresponding to the at least one predetermined object; and
generating a mask image (450) by obtaining a pixel value of the at least one determined region.

11. The method of claim 10, further comprising:
inputting the first image (410) into a previously trained image classification model;
based on an output of the image classification model, identifying whether the first image (410) includes at least one predetermined object; and
based on identifying that the first image (410) includes the at least one predetermined object, identifying one or more objects in the first image (410).

12. The method of claim 10 or claim 11, further comprising:
based on a pixel value of the first image (410), obtaining an entire brightness value of the first image (410); and
based on the obtained entire brightness value of the first image (410), changing an entire brightness value of the second image (440).

13. The method of any one of claims 10 to 12, further comprising:
based on a pixel value of the second image (440), obtaining a value map corresponding to the second image (440); and
based on a lightness value of the at least one map related to the pixel value of the first region, adjusting a pixel value included in the value map, wherein the lightness value of the at least one map is obtained from hue-saturation-value, HSV, values of pixels of the first region.

## Patentansprüche

1. Elektronische Vorrichtung (101, 200), umfassend:
ein Kameramodul (180, 210) umfassend eine Kamera;
ein Anzeigemodul (160, 220) umfassend eine Anzeige;
einen Speicher (130, 230), der Anweisungen speichert; und
mindestens einen Prozessor (120, 240), der eine Verarbeitungsschaltung umfasst und mit dem Kameramodul (180, 210), dem Anzeigemodul (160, 220) und dem Speicher (130, 230) wirkverbunden ist,
wobei die Anweisungen bei Ausführung durch den mindestens einen Prozessor (120, 240) die elektronische Vorrichtung zu Folgendem veranlassen:
ein oder mehrere Objekte in einem ersten Bild (410) zu identifizieren,
basierend auf Pixelwerten von Bereichen, die jeweils dem einen oder den mehreren identifizierten Objekten entsprechen, mindestens eine auf einen Pixelwert eines ersten Bereichs des ersten Bildes (410) bezogene Karte zu bestimmen,
basierend auf mindestens einem von Metadaten des ersten Bildes (410), einer Benutzereingabe zum Bestimmen einer Komposition eines zweiten Bildes (440) oder einem dreidimensionalen, 3D, -Modell (430) das zweite Bild (440) zu generieren,
basierend auf der mindestens einen bestimmten Karte einen Pixelwert von mindestens einem Teilbereich des zweiten Bildes (440), der dem ersten Bereich entspricht, zu ändern,
ein drittes Bild (460) durch Synthetisieren des zweiten Bildes (440), in dem der Pixelwert geändert ist, mit einem zweiten Bereich des ersten Bildes (410) zu erhalten, und
über das Anzeigemodul (160, 220) das dritte Bild (460) anzuzeigen,
**dadurch gekennzeichnet, dass** die Anweisungen bei Ausführung durch den mindestens einen Prozessor die elektronische Vorrichtung zu Folgendem veranlassen:
zu identifizieren, ob das eine oder die mehreren identifizierten Objekte mindestens ein vorbestimmtes Objekt umfassen,
basierend auf dem Identifizieren, dass das eine oder die mehreren identifizierten Objekte das mindestens eine vorbestimmte Objekt umfassen, mindestens einen Bereich, der dem mindestens einen vorbestimmten Objekt entspricht, zu bestimmen, und
ein Maskenbild (450) durch Erhalten eines Pixelwerts des mindestens einen bestimmten Bereichs zu generieren.

2. Elektronische Vorrichtung (101, 200) nach Anspruch 1, wobei die Anweisungen bei Ausführung durch den mindestens einen Prozessor (120, 240) die elektronische Vorrichtung zu Folgendem veranlassen:
das erste Bild (410) in ein zuvor trainiertes Bildklassifizierungsmodell einzugeben,
basierend auf einer Ausgabe des Bildklassifizierungsmodells zu identifizieren, ob das erste Bild (410) mindestens ein vorbestimmtes Objekt umfasst, und
basierend auf dem Identifizieren, dass das erste Bild (410) das mindestens eine vorbestimmte Objekt umfasst, ein oder mehrere Objekte in dem ersten Bild (410) zu identifizieren.

3. Elektronische Vorrichtung (101, 200) nach Anspruch 1 oder 2, wobei die Anweisungen bei Ausführung durch den mindestens einen Prozessor (120, 240) die elektronische Vorrichtung zu Folgendem veranlassen:
basierend auf einem Pixelwert des ersten Bildes (410) einen Gesamthelligkeitswert des ersten Bildes (410) zu erhalten, und
basierend auf dem erhaltenen Gesamthelligkeitswert des ersten Bildes (410) einen Gesamthelligkeitswert des zweiten Bildes (440) zu ändern.

4. Elektronische Vorrichtung (101, 200) nach einem der Ansprüche 1 bis 3, wobei die Anweisungen bei Ausführung durch den mindestens einen Prozessor (120, 240) die elektronische Vorrichtung zu Folgendem veranlassen:
basierend auf einem Pixelwert des zweiten Bildes (440) eine Wertekarte, die dem zweiten Bild (440) entspricht, zu erhalten, und
basierend auf einem Hellwert der mindestens einen auf den Pixelwert des ersten Bereichs bezogenen Karte einen in der Wertekarte enthaltenen Pixelwert anzupassen, wobei der Hellwert der mindestens einen Karte aus Farbton-Sättigung-Wert-, HSV, -Werten von Pixeln des ersten Bereichs erhalten wird.

5. Elektronische Vorrichtung (101, 200) nach einem der Ansprüche 1 bis 4, wobei das 3D-Modell Informationen in Zusammenhang mit Positionen und Pixelwerten von einem oder mehreren Himmelsobjekten umfasst.

6. Elektronische Vorrichtung (101, 200) nach einem der Ansprüche 1 bis 5, wobei die Anweisungen bei Ausführung durch den mindestens einen Prozessor (120, 240) die elektronische Vorrichtung zu Folgendem veranlassen:
das zweite Bild (440) mit dem ersten Bild (410) zu synthetisieren,
über das Anzeigemodul (160, 220) ein Synthesebild und eine Vielzahl von Objekten anzuzeigen, basierend auf einer Benutzereingabe zu mindestens einem der Vielzahl von Objekten mindestens eines von einer Richtung und einem Winkel des zweiten Bildes (440) anzupassen,
das dritte Bild (460) durch Synthetisieren des angepassten zweiten Bildes (440) mit mindestens einigen der Bereiche des ersten Bildes (410) zu erhalten, und
über das Anzeigemodul (160, 220) das dritte Bild (460) anzuzeigen.

7. Elektronische Vorrichtung (101, 200) nach einem der Ansprüche 1 bis 6, wobei die Anweisungen bei Ausführung durch den mindestens einen Prozessor (120, 240) die elektronische Vorrichtung zu Folgendem veranlassen:
eine Benutzereingabe zu einem der Vielzahl von Objekten zu erfassen, und
basierend auf der erfassten Benutzereingabe den Pixelwert des zweiten Bildes (440) anzupassen.

8. Elektronische Vorrichtung (101, 200) nach einem der Ansprüche 1 bis 7, wobei die Anweisungen bei Ausführung durch den mindestens einen Prozessor (120, 240) die elektronische Vorrichtung zu Folgendem veranlassen:
basierend auf Metadaten eines durch das Kameramodul (180, 210) erhaltenen anfänglichen Eingabebildes (1101_1) eine anfängliche Komposition eines Himmelsobjektbildes (1111_1), das dem anfänglichen Eingabebild (1101_1) entspricht, zu bestimmen,
einen anfänglichen Synthese-Frame (1121_1) durch Synthetisieren des basierend auf der bestimmten anfänglichen Komposition generierten Himmelsobjektbildes (1111_1) mit dem anfänglichen Eingabebild (1101_1) zu erhalten,
basierend auf einem Zeitstempel jedes von einem oder mehreren durch das Kameramodul (180, 210) ferner erhaltenen Eingabebildern (1101_N) die Komposition des Himmelsobjektbildes (1111_1) anzupassen,
einen oder mehrere Synthese-Frames (1121_N) durch Synthetisieren eines jeweiligen Himmelsobjektbildes (1111_N), dessen Komposition basierend auf jedem Zeitstempel angepasst wird, mit jedem des einen oder der mehreren Eingabebilder (1101_N) zu erhalten, und
ein Synthesevideo (1131) durch sequenzielles Verbinden des anfänglichen Synthese-Frames (1121_1) und der erhaltenen Synthese-Frames (1121_N) zu erhalten.

9. Elektronische Vorrichtung (101, 200) nach einem der Ansprüche 1 bis 8, wobei die Anweisungen bei Ausführung durch den mindestens einen Prozessor (120, 240) die elektronische Vorrichtung zu Folgendem veranlassen:
eine Videolänge des zweiten Bildes (440, 1301) basierend auf einer Eingabe zu bestimmen,
basierend auf der bestimmten Videolänge ein oder mehrere Himmelsobjektbilder (1311_N) durch Ändern der Komposition des zweiten Bildes (440, 1301) in vorbestimmten Zeitintervallen zu erhalten,
ein Diurnalbewegungsbild (1320) durch Akkumulieren des einen oder der mehreren erhaltenen Himmelsobjektbilder (1311_N) zu erhalten,
ein drittes Bild (1330), auf das ein Diurnalbewegungseffekt angewendet ist, durch Synthetisieren des erhaltenen Diurnalbewegungsbildes (1320) mit mindestens einigen der Bereiche des ersten Bildes (410) zu erhalten, und
über das Anzeigemodul (160, 220) das dritte Bild (1330), auf das der Diurnalbewegungseffekt angewendet ist, anzuzeigen.

10. Verfahren zur Bildsynthese einer elektronischen Vorrichtung (101, 200), umfassend:
Identifizieren eines oder mehrerer Objekte in einem ersten Bild (410);
basierend auf Pixelwerten von Bereichen, die jeweils dem einen oder den mehreren identifizierten Objekten entsprechen, Bestimmen mindestens einer auf einen Pixelwert eines ersten Bereichs des ersten Bildes (410) bezogenen Karte;
basierend auf mindestens einem von Metadaten des ersten Bildes (410), einer Benutzereingabe zum Bestimmen einer Komposition eines zweiten Bildes (440) oder einem dreidimensionalen, 3D, -Modell (430), Generieren des zweiten Bildes (440);
basierend auf der mindestens einen bestimmten Karte, Ändern eines Pixelwerts von mindestens einem Teilbereich des zweiten Bildes (440), der dem ersten Bereich entspricht;
Erhalten eines dritten Bildes (460) durch Synthetisieren des zweiten Bildes (440), in dem der Pixelwert geändert ist, mit einem zweiten Bereich des ersten Bildes (410); und
Anzeigen, über ein Anzeigemodul (160, 220), des dritten Bildes (460),
**dadurch gekennzeichnet, dass** das Verfahren ferner Folgendes umfasst:
Identifizieren, ob das eine oder die mehreren identifizierten Objekte mindestens ein vorbestimmtes Objekt umfassen;
basierend auf dem Identifizieren, dass das eine oder die mehreren identifizierten Objekte das mindestens eine vorbestimmte Objekt umfassen, Bestimmen mindestens eines Bereichs, der dem mindestens einen vorbestimmten Objekt entspricht; und
Generieren eines Maskenbildes (450) durch Erhalten eines Pixelwerts des mindestens einen bestimmten Bereichs.

11. Verfahren nach Anspruch 10, ferner umfassend:
Eingeben des ersten Bildes (410) in ein zuvor trainiertes Bildklassifizierungsmodell;
basierend auf einer Ausgabe des Bildklassifizierungsmodells, Identifizieren, ob das erste Bild (410) mindestens ein vorbestimmtes Objekt umfasst; und
basierend auf dem Identifizieren, dass das erste Bild (410) das mindestens eine vorbestimmte Objekt umfasst, Identifizieren eines oder mehrerer Objekte in dem ersten Bild (410).

12. Verfahren nach Anspruch 10 oder 11, ferner umfassend:
basierend auf einem Pixelwert des ersten Bildes (410), Erhalten eines Gesamthelligkeitswertes des ersten Bildes (410); und
basierend auf dem erhaltenen Gesamthelligkeitswert des ersten Bildes (410), Ändern eines Gesamthelligkeitswertes des zweiten Bildes (440).

13. Verfahren nach einem der Ansprüche 10 bis 12, ferner umfassend:
basierend auf einem Pixelwert des zweiten Bildes (440), Erhalten einer Wertekarte, die dem zweiten Bild (440) entspricht; und
basierend auf einem Hellwert der mindestens einen auf den Pixelwert des ersten Bereichs bezogenen Karte, Anpassen eines in der Wertekarte enthaltenen Pixelwerts, wobei der Hellwert der mindestens einen Karte aus Farbton-Sättigung-Wert-, HSV, -Werten von Pixeln des ersten Bereichs erhalten wird.

## Revendications

1. Dispositif électronique (101, 200), comprenant :
un module de caméra (180, 210) incluant une caméra ;
un module d'affichage (160, 220) incluant un écran ;
une mémoire (130, 230) stockant des instructions ; et
au moins un processeur (120, 240) comprenant des circuits de traitement, connectés de manière opérationnelle au module de caméra (180, 210), au module d'affichage (160, 220) et à la mémoire (130, 230),
dans lequel les instructions, lorsqu'elles sont exécutées par ledit au moins un processeur (120, 240), amènent le dispositif électronique à :
identifier un ou plusieurs objets dans une première image (410),
sur la base des valeurs de pixel des régions correspondant respectivement à l'un ou plusieurs objets identifiés, déterminer au moins une carte liée à une valeur de pixel d'une première région de la première image (410),
sur la base d'au moins des métadonnées de la première image (410), d'une entrée utilisateur pour déterminer une composition d'une deuxième image (440), ou d'un modèle tridimensionnel, 3D, (430), générer la deuxième image (440),
sur la base de ladite au moins une carte déterminée, changer une valeur de pixel d'au moins une zone partielle de la deuxième image (440) correspondant à la première région,
obtenir une troisième image (460) en synthétisant, avec une deuxième région de la première image (410), la deuxième image (440) dans laquelle la valeur de pixel est changée, et
afficher, via le module d'affichage (160, 220), la troisième image (460),
**caractérisé en ce que** les instructions, lorsqu'elles sont exécutées par ledit au moins un processeur, amènent le dispositif électronique à :
identifier si l'un ou plusieurs objets identifiés incluent au moins un objet prédéterminé,
sur la base de l'identification que l'un ou plusieurs objets identifiés incluent ledit au moins un objet prédéterminé, déterminer au moins une région correspondant audit au moins un objet prédéterminé, et
générer une image de masque (450) en obtenant une valeur de pixel de ladite au moins une région déterminée.

2. Dispositif électronique (101, 200) selon la revendication 1, dans lequel les instructions, lorsqu'elles sont exécutées par ledit au moins un processeur (120, 240), amènent le dispositif électronique à :
entrer la première image (410) dans un modèle de classification d'images précédemment entraîné,
sur la base d'une sortie du modèle de classification d'images, identifier si la première image (410) inclut au moins un objet prédéterminé, et
sur la base de l'identification que la première image (410) inclut ledit au moins un objet prédéterminé, identifier un ou plusieurs objets dans la première image (410).

3. Dispositif électronique (101, 200) selon la revendication 1 ou 2, dans lequel les instructions, lorsqu'elles sont exécutées par ledit au moins un processeur (120, 240), amènent le dispositif électronique à :
sur la base d'une valeur de pixel de la première image (410), obtenir une valeur de luminosité totale de la première image (410), et
sur la base de la valeur de luminosité totale obtenue de la première image (410), changer une valeur de luminosité totale de la deuxième image (440).

4. Dispositif électronique (101, 200) selon l'une quelconque des revendications 1 à 3, dans lequel les instructions, lorsqu'elles sont exécutées par ledit au moins un processeur (120, 240), amènent le dispositif électronique à :
sur la base d'une valeur de pixel de la deuxième image (440), obtenir une carte de valeurs correspondant à la deuxième image (440), et
sur la base d'une valeur de luminosité de ladite au moins une carte liée à la valeur de pixel de la première zone, ajuster une valeur de pixel incluse dans la carte de valeurs, la valeur de luminosité de ladite au moins une carte étant obtenue à partir des valeurs teinte-saturation-luminosité, HSV, des pixels de la première région.

5. Dispositif électronique (101, 200) selon l'une quelconque des revendications 1 à 4, dans lequel le modèle 3D inclut des informations liées à des localisations et à des valeurs de pixel d'un ou plusieurs objets célestes.

6. Dispositif électronique (101, 200) selon l'une quelconque des revendications 1 à 5, dans lequel les instructions, lorsqu'elles sont exécutées par ledit au moins un processeur (120, 240), amènent le dispositif électronique à :
synthétiser la deuxième image (440) avec la première image (410),
afficher, via le module d'affichage (160, 220), une image synthétisée et une pluralité d'objets, sur la base d'une entrée utilisateur sur au moins l'un de la pluralité d'objets, ajuster au moins l'un d'une direction et d'un angle de la deuxième image (440),
obtenir la troisième image (460) en synthétisant la deuxième image (440) ajustée avec au moins certaines régions de la première image (410), et
afficher, via le module d'affichage (160, 220), la troisième image (460).

7. Dispositif électronique (101, 200) selon l'une quelconque des revendications 1 à 6, dans lequel les instructions, lorsqu'elles sont exécutées par ledit au moins un processeur (120, 240), amènent le dispositif électronique à :
détecter une entrée utilisateur sur l'un de la pluralité d'objets, et
sur la base de l'entrée utilisateur détectée, ajuster la valeur de pixel de la deuxième image (440).

8. Dispositif électronique (101, 200) selon l'une quelconque des revendications 1 à 7, dans lequel les instructions, lorsqu'elles sont exécutées par ledit au moins un processeur (120, 240), amènent le dispositif électronique à :
sur la base des métadonnées d'une image d'entrée initiale (1101_1) obtenue par le module de caméra (180, 210), déterminer une composition initiale d'une image d'objet céleste (1111_1) correspondant à l'image d'entrée initiale (1101_1),
obtenir une trame synthétisée initiale (1121_1) en synthétisant l'image d'objet céleste (1111_1) générée sur la base de la composition initiale déterminée avec l'image d'entrée initiale (1101_1),
sur la base d'un horodatage de chacune d'une ou plusieurs images d'entrée (1101_N) obtenues en outre par le module de caméra (180, 210), ajuster la composition de l'image d'objet céleste (1111_1),
obtenir une ou plusieurs trames synthétisées (1121_N) en synthétisant, avec chacune de l'une ou plusieurs images d'entrée (1101_N), une image d'objet céleste (1111_N) respective dont la composition est ajustée sur la base de chaque horodatage, et
obtenir une vidéo synthétisée (1131) en connectant par séquence la trame synthétisée initiale (1121_1) et les frames synthétisées (1121_N) obtenues.

9. Dispositif électronique (101, 200) selon l'une quelconque des revendications 1 à 8, dans lequel les instructions, lorsqu'elles sont exécutées par ledit au moins un processeur (120, 240), amènent le dispositif électronique à :
déterminer une durée vidéo de la deuxième image (440, 1301) sur la base d'une entrée,
sur la base de la durée vidéo déterminée, obtenir une ou plusieurs images d'objet céleste (1311_N) en changeant la composition de la deuxième image (440, 1301) à intervalles de temps prédéterminés,
obtenir une image de mouvement diurne (1320) en accumulant l'une ou plusieurs images d'objets célestes (1311_N) obtenues,
obtenir une troisième image (1330) à laquelle un effet de mouvement diurne est appliqué, en synthétisant l'image de mouvement diurne (1320) obtenue avec au moins certaines régions de la première image (410), et
afficher, via le module d'affichage (160, 220), la troisième image (1330) à laquelle l'effet de mouvement diurne est appliqué.

10. Procédé de synthèse d'image d'un dispositif électronique (101, 200), le procédé comprenant :
identifier un ou plusieurs objets dans une première image (410) ;
sur la base des valeurs de pixel des régions correspondant respectivement à l'un ou plusieurs objets identifiés, déterminer au moins une carte liée à une valeur de pixel d'une première région de la première image (410) ;
sur la base d'au moins des métadonnées de la première image (410), d'une entrée utilisateur pour déterminer une composition d'une deuxième image (440), ou d'un modèle tridimensionnel, 3D, (430), générer la deuxième image (440) ;
sur la base de ladite au moins une carte déterminée, changer une valeur de pixel d'au moins une zone partielle de la deuxième image (440) correspondant à la première région ;
obtenir une troisième image (460) en synthétisant, avec une deuxième région de la première image (410), la deuxième image (440) dans laquelle la valeur de pixel est changée ; et
afficher, via un module d'affichage (160, 220), la troisième image (460),
**caractérisé en ce que**, le procédé comprend en outre :
identifier si l'un ou plusieurs objets identifiés incluent au moins un objet prédéterminé ;
sur la base de l'identification que l'un ou plusieurs objets identifiés incluent ledit au moins un objet prédéterminé, déterminer au moins une région correspondant audit au moins un objet prédéterminé ; et
générer une image de masque (450) en obtenant une valeur de pixel de ladite au moins une région déterminée.

11. Procédé selon la revendication 10, comprenant en outre :
entrer la première image (410) dans un modèle de classification d'images précédemment entraîné ;
sur la base d'une sortie du modèle de classification d'images, identifier si la première image (410) inclut au moins un objet prédéterminé ; et
sur la base de l'identification que la première image (410) inclut ledit au moins un objet prédéterminé, identifier un ou plusieurs objets dans la première image (410).

12. Procédé selon la revendication 10 ou 11, comprenant en outre :
sur la base d'une valeur de pixel de la première image (410), obtenir une valeur de luminosité totale de la première image (410) ; et
sur la base de la valeur de luminosité totale obtenue de la première image (410), changer une valeur de luminosité totale de la deuxième image (440).

13. Procédé selon l'une quelconque des revendications 10 à 12, comprenant en outre :
sur la base d'une valeur de pixel de la deuxième image (440), obtenir une carte de valeurs correspondant à la deuxième image (440) ; et
sur la base d'une valeur de luminosité de ladite au moins une carte liée à la valeur de pixel de la première zone, ajuster une valeur de pixel incluse dans la carte de valeurs, la valeur de luminosité de ladite au moins une carte étant obtenue à partir des valeurs teinte-saturation-luminosité, HSV, des pixels de la première région.
